# EUROPEAN PATENT APPLICATION

(11) **EP 1 486 467 A1**
(43) Date of publication of application: **15.12.2004**
(21) Application number: 03705352.7
(22) Date of filing: 20.02.2003
(51) Int. Cl.: C03C 10/14

(54) **METHOD OF PRODUCTION AND METHOD OF QUALITY CONTROL FOR GLASS CERAMIC**

(30) Priority: 27.02.2002 JP 2002051790
(71) Applicant: Kabushiki Kaisha Ohara, Sagamihara-shi, Kanagawa 229-1186 (JP)
(72) Inventor: KATAOKA, Mariko, Kobe-shi, Hyogo 651-2111 (JP); YAGI, Toshitaka, Sagamihara-shi, Kanagawa 229-1111 (JP); TAKAMURA, Yuichi, Sagamihara-shi, Kanagawa 229-1134 (JP); GOTO, Naoyuki, Machida-shi, Tokyo 194-0212 (JP)
(74) Representative: Grünecker, Kinkeldey, Stockmair & Schwanhäusser Anwaltssozietät
(86) International application number: PCT/JP2003/001861
(87) International publication number: WO 2003/072520

(57) **Abstract**

Obtaining previously a relation between a crystallization temperature and a physical property and a relation between a physical property parameter and the physical property of a glass ceramic, measuring the physical property parameter with respect to the glass ceramic sampled from a manufacturing line of the glass ceramic and controlling an actual crystallization temperature based on the relations so that the manufactured glass ceramic has the desired physical property value.

## Description

### Technical Field

The present invention relates to a manufacturing method and quality control method of a glass ceramic having desired values of the physical properties such as an elastic modulus, a thermal expansion coefficient and the like.

### Background Art

A glass ceramic, such for a substrate material for an information storage medium, optical communication and the like, is used in many fields. It is required that the materials used in these field is controlled to have accurate values of physical properties such as a thermal expansion coefficient, Young's modulus and the like.

Generally, the desired physical properties of a glass ceramic depends on its degree of crystallinity and crystallization temperature. There are a correlation between degree of crystallinity of a glass ceramic and its thermal expansion coefficient, elastic modulus and the like.

As for the means for controlling these values of physical properties, a method is adopted, where a glass ceramic is sampled from a glass ceramic manufacturing line, the values of physical properties thereof are measured directly, and the measured values are fed back to its crystallization temperature. However, it is difficult to measure the thermal expansion coefficient in a non destructive manner and it takes considerable time to feed it back to the manufacturing condition.

The object of the present invention is to provide a rapid and easy quality control method of a glass ceramic where desired physical properties which can not be measured with a non destructive inspection, such as a thermal expansion coefficient and the like, are evaluated indirectly, and a manufacturing method of a glass ceramic having high quality at low cost.

### Disclosure of Invention

That is, according to the first aspect of the invention, the manufacturing method of a glass ceramic in the present invention is a manufacturing method of a glass ceramic having a desired physical property value and a physical property parameter which relates to the desired physical property, comprising:
obtaining a relation between a crystallization temperature and the physical property and a relation between a the physical property parameter and the physical property with respect to a glass ceramic having an identical composition of the glass ceramic
measuring the physical property parameter with respect to the glass ceramic sampled from a manufacturing line of the glass ceramic,
determining an actual crystallization temperature corresponding to the desired physical property value based on the relations,
giving a heat treatment to an original glass at the determined temperature so as to grow a predetermined crystal phase.

According to the second aspect of the present invention, the quality control method of a glass ceramic in the present invention is a quality control method of a glass ceramic having a desired physical property value and a physical property parameter which relates to the desired physical property, comprising:
obtaining a relation between a crystallization temperature and the physical property and a relation between a the physical property parameter and the physical property with respect to a glass ceramic having an identical composition of the glass ceramic,
measuring the physical property parameter with respect to the glass ceramic sampled from a manufacturing line of the glass ceramic and
controlling an actual crystallization temperature so that the manufactured glass ceramic has the desired physical property value.

According to the manufacturing method and quality control method of the glass ceramic in the present invention, the physical property is preferably a thermal expansion coefficient and the physical property parameter is preferably a density. When the physical property is a thermal expansion coefficient and the physical property parameter is a density, it is preferable in a previously obtained relation between the density and the thermal expansion coefficient that the absolute value of the slope of the thermal expansion coefficient based on the density is 4.0x10⁻⁴ cm³·g⁻¹·K⁻¹ or less at a desired value of a thermal expansion coefficient.

The predetermined crystal phase preferably contains α-quartz, and concretely the predetermined crystal phase is preferably α-quartz and lithium disilicate.

The physical property parameter may be a XRD peak area intensity. Also in this case, it is preferable that the predetermined crystal phase contains α-quartz and the predetermined crystal phase is α-quartz and lithium disilicate. In this case, the XRD peak area intensity is preferably a peak area intensity of α-quartz at 2θ=26°.

The physical property parameter may be ultrasonic longitudinal wave velocity. When the physical property is a thermal expansion coefficient and the physical property parameter is velocity of a ultrasonic longitudinal wave, it is preferable in a previously obtained relation between the longitudinal wave velocity and the thermal expansion coefficient that the absolute value of the slope of the thermal expansion coefficient based on the longitudinal wave velocity is 8.0x10⁻⁵ µs·mm⁻¹·K⁻¹ or less at a desired thermal expansion coefficient.

According to the manufacturing method and quality control method of a glass ceramic in the present invention, the desired physical property is a physical properties of a glass ceramic which is difficult to be subject to a non destructive inspection, and represents a thermal expansion coefficient or the like.

According to the manufacturing method and quality control method of a glass ceramic in the present invention, the physical property parameter is a physical properties of a glass ceramic which are capable of being measured by a non destructive inspection, and represents a density, a XRD peak area intensity and ultrasonic longitudinal wave velocity and the like.

According to the manufacturing method and the quality control method of a glass ceramic in the present invention, the relation between a crystallization temperature and the physical property and the relation between the physical property parameter and the physical property with respect to a glass ceramic having an identical composition of the aforesaid glass ceramic are previously obtained. Thus, it becomes possible to achieve the rapid and high-quality manufacturing method and quality control method of a glass ceramic by monitoring the physical property.

According to the manufacturing method and quality control method of a glass ceramic in the present invention, it is also preferable to obtain the relation between a crystallization temperature and the physical property parameter as well as the relation between the crystallization temperature and the physical property and the relation between the physical property parameter and the physical property, with respect to a glass ceramic having an identical composition.

According to the manufacturing method and quality control method of a glass ceramic in the present invention, when a density of a glass ceramic depends on its degree of crystallinity and crystallization temperature, i.e. the density of a crystal phase is largely different from the density of glass matrix, the physical property is preferably a density. Concretely, when the desired property is a thermal expansion coefficient and a absolute value of the slope of the thermal expansion coefficient based on the density is 4.0x10⁻⁴ cm³·g⁻¹·K⁻¹ or less at a desired value of the thermal expansion coefficient, the physical property parameter is preferably a density. A density of a glass ceramic can be easily and quickly measured. Thus, it becomes possible to perform a precise quality control of a thermal expansion coefficient when the physical property parameter is a density.

On the other hand, when the density of the crystal phase is close to a density of glass matrix, the value of the thermal expansion coefficient of the glass ceramic can not be estimated by measuring the density thereof. When the absolute value of the slope of the thermal expansion coefficient based on the density is more than 4.0x10⁻⁴ cm³·g⁻¹·K⁻¹ at a desired value of the thermal expansion coefficient, the physical property parameter is preferably a XRD peak area intensity or a ultrasonic longitudinal wave velocity.

According to the manufacturing method and quality control method of a glass ceramic in the present invention, a XRD peak area can be used as the physical property parameter. For example, when a predominant crystal phase of a glass ceramic is α-quartz, a particular XRD peak area intensity at around 2θ=26° is monitored by a X-ray diffractometory, so that it becomes possible to control the quality of the glass ceramic.

According to the manufacturing method and quality control method of a glass ceramic in the present invention, ultrasonic longitudinal wave velocity can be used as the physical property parameter. Ultrasonic longitudinal wave velocity in a glass ceramic largely depends on a deposited crystalline content, and are strongly correlated with the degree of crystallinity, thermal expansion coefficient and the like. Ultrasonic longitudinal wave velocity is suitable for simple and easy quality inspection, since it can be measured in a non destructive manner. Accordingly, by measuring longitudinal velocity of a ultrasonic wave transmitting in a glass ceramic, it becomes possible to estimate the desired physical property of a glass ceramics such as a thermal expansion so as to control a quality of a glass ceramic easily and simply.

As for a easy and simple measuring method of ultrasonic longitudinal wave velocity, a method of irradiating ultrasonic wave generated by PZT directly to a sample, water-soaking method of soaking a sample under test to a liquid and performing a measurement in the liquid and the like are given.

### Brief Description of the Drawings

Fig 1 is a graph showing a relation between the density and the thermal expansion coefficient obtained in the manufacturing method and quality control method of a glass ceramic according to the present invention,
Fig. 2 is a graph showing a relation between the crystallization temperature and the density obtained in the manufacturing method and quality control method of a glass ceramic according to the present invention,
Fig. 3 is a graph showing a relation between the crystallization temperature and the thermal expansion coefficient obtained in the manufacturing method and quality control method of a glass ceramic according to the present invention,
Fig. 4 is a graph showing a relation between the density and the thermal expansion coefficient of a glass ceramic,
Fig. 5 is a graph showing a relation between the XRD peak area intensity and the thermal expansion coefficient obtained in the manufacturing method and quality control method of a glass ceramic according to the present invention,
Fig. 6 is a graph showing a relation between the crystallization temperature and the XRD peak area intensity obtained in the manufacturing method and quality control method of a glass ceramic according to the present invention,
Fig. 7 is a graph showing a relation between the crystallization temperature and the thermal expansion coefficient obtained in the manufacturing method and quality control method of a glass ceramic according to the present invention,
Fig. 8 is a graph showing a relation between the density and the thermal expansion coefficient of a glass ceramic,
Fig. 9 is a graph showing a relation between the density ultrasonic longitudinal wave velocity and the thermal expansion coefficient obtained in the manufacturing method and quality control method of a glass ceramic according to the present invention,
Fig. 10 is a graph showing a relation between the crystallization temperature and the ultrasonic longitudinal wave velocity obtained in the manufacturing method and quality control method of a glass ceramic according to the present invention, and
Fig. 11 is a graph showing a relation between the crystallization temperature and the thermal expansion coefficient obtained in the manufacturing method and quality control method of a glass ceramic according to the present invention.

### Best Mode for Carrying Out the Invention

In the present embodiment, as for the thermal expansion coefficient of a glass ceramic, an average linear thermal expansion coefficient at 25 °C to 100 °C was measured according to "Measuring method of thermal expansion of fine ceramics by a thermomechanical analysis (JIS R 1618)". A density of a glass ceramic was measured by "Measuring method for specific gravity of solid (JISZ8807)". Full-automatic powder X-ray diffraction apparatus (XRD) produced by Philips Co. were used in a X-ray diffraction. Ultrasonic longitudinal wave velocity of a glass ceramic was measured by Model-25 produced by Japan Panemetrics Co.

### (Embodiment 1)

A manufacturing method of a glass ceramic in which the desired physical property is a thermal expansion coefficient of 90x10⁻⁷ K⁻¹ and a quality control method in which the physical property parameter is a density will be explained.

A original glass consisting of the following components in mass% in terms of a oxide,

| | |
|---|---|
| SiO₂ | 75.3% |
| Li₂O | 9.9% |
| K₂O | 2.0% |
| MgO | 0.8% |
| ZnO | 0.5% |
| P₂O₅ | 2.0% |
| ZrO₂ | 2.3% |
| Al₂O₃ | 7.0% |
| Sb₂O₃ | 0.2% |

was subject to a heat treatment at 540°C for 5 hours, so that crystalline nuclei are formed, and subsequently was subject to a heat treatment for 3 hours at various crystallization temperatures in a range of 740 to 775 °C, so that a sample of a glass ceramic was obtained. The density and thermal expansion coefficient of the sample were measured. The predominant crystal phase was α-quartz and a small amount of lithium disilicate was contained.

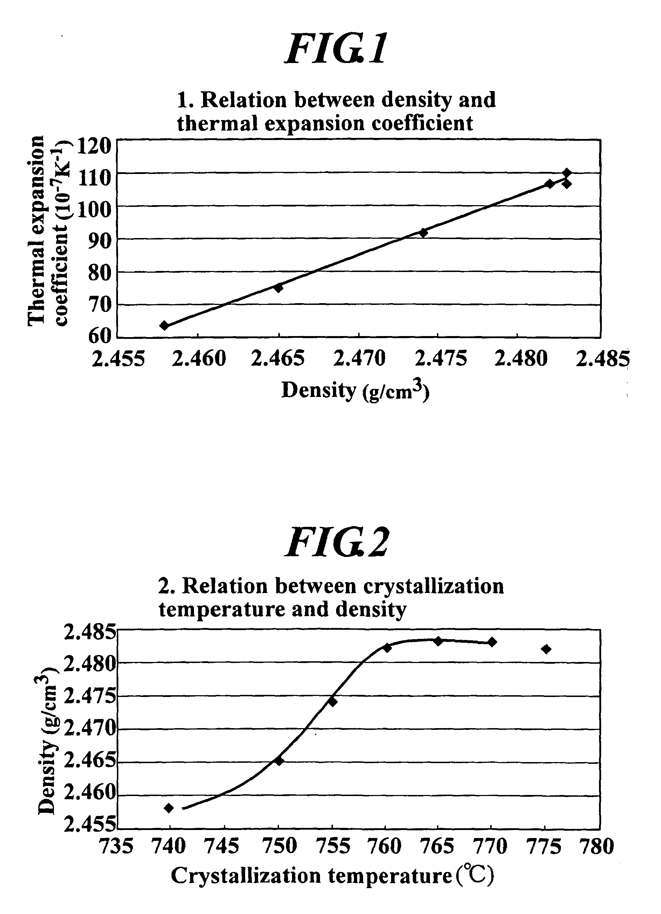

This results are shown in Fig. 1 to Fig. 3. There is a linear relation between the density and the thermal expansion coefficient, and the relation between the crystallization temperature and the density can be regarded as a primary linear relation around at the desired physical property. In the graph of Fig. 1, the slope of the thermal expansion coefficient based on the density was 1.9x10⁻⁴ cm³·g·K⁻¹.

Next, a density of a glass ceramic was measured, which was obtained in a glass ceramic manufacturing line in which a original glass having approximately identical composition was subjected to a heat treatment at 540°C for 5 hours so that crystalline nuclei are formed, subsequently was subjected to a heat treatment at 755°C for 3 hours to be crystallized. The measured density thereof was 2.4693.

The thermal expansion coefficient corresponding to the density of 2.4693 was estimated at 85x10⁻⁷ K⁻¹ according to the graph of Fig. 1. Therefore, the crystallization temperature was changed +2°C to be 757°C, and the manufacturing of the glass ceramic was continued. As a result, the glass ceramic having the desired physical property that the thermal expansion coefficient thereof is 90x10⁻⁷ K⁻¹ was obtained.

### (Embodiment 2)

A manufacturing method of a glass ceramics in which the desired physical property is a thermal expansion coefficient thereof of 105x10⁻⁷ K⁻¹ and a quality control method in which the physical property parameter is a XRD peak area intensity will be explained.

A original glass consisting of the following components in mass% in terms of a oxide,

| | |
|---|---|
| SiO₂ | 76.1% |
| Li₂O | 10.0% |
| K₂O | 1.0% |
| MgO | 0.8% |
| ZnO | 0.5% |
| P₂O₅ | 2.0% |
| ZrO₂ | 2.3% |
| Al₂O₃ | 7.1% |
| Sb₂O₃ | 0.2% |

was subject to a heat treatment at 540 °C for 5 hours, so that crystalline nuclei are formed, and subsequently was subject to a heat treatment for 3 hours at various crystallization temperatures in a range of 730 to 745 °C to be crystallized. Thus, the glass ceramic was obtained. The density, XRD peak area intensity and thermal expansion coefficient of this sample were measured. The predominant crystal phase of the glass ceramic was α-quartz and a small amount of lithium disilicate was contained. As for the XRD peak area intensity, an area intensity at 2θ=25.3° to 26.7° ({101} peak of α-quartz) was obtained.

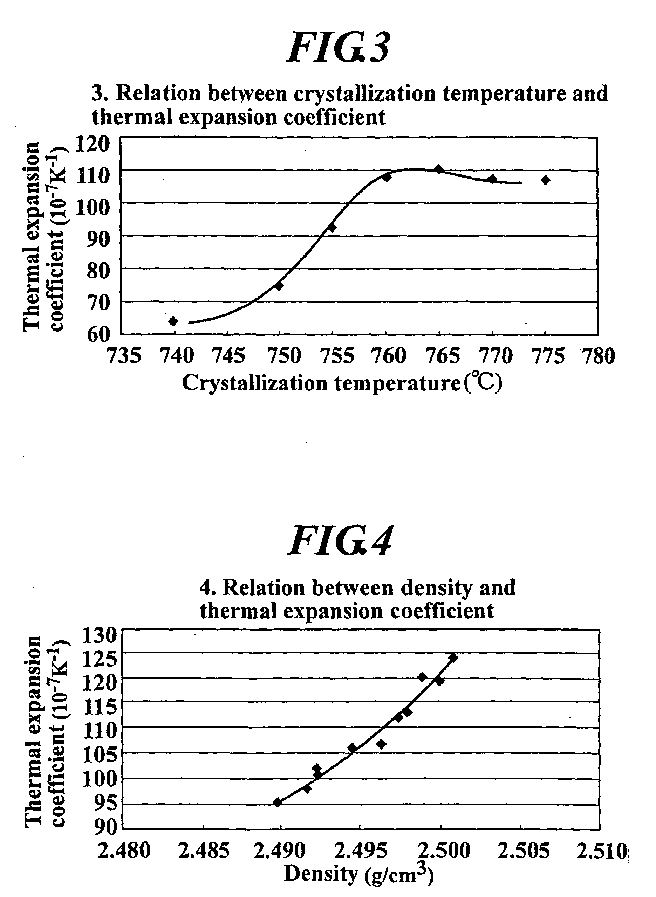

A relation between the density and the thermal expansion coefficient is shown in the graph of Fig. 4. The slope of the thermal expansion coefficient based on the density was 2.7x10⁻⁴ cm³·g·K⁻¹ at around 110x10⁻⁷ of the thermal expansion coefficient.

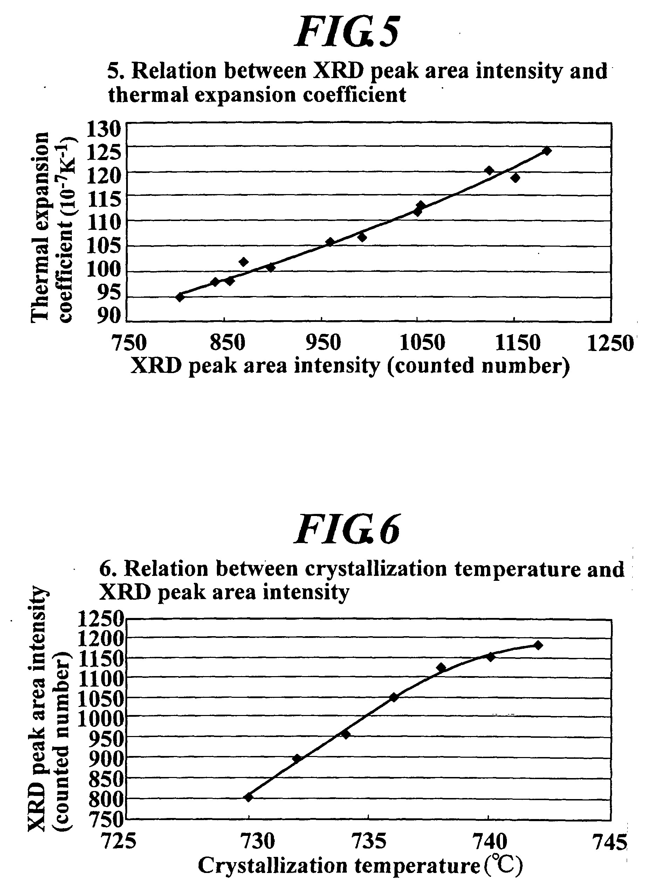

A relation between the XRD peak area and the thermal expansion coefficient is shown in the graph of Fig. 5. There is a linear relation between the thermal expansion coefficient and the XRD peak area intensity. The relation between the XRD peak area intensity and the crystallization temperature can be regarded as a linear relation around at the desired physical property. In the graph of Fig. 5, the slope of the thermal expansion coefficient based on the XRD peak area intensity was 7.3x10-⁹ K⁻¹.

Next, a XRD peak area intensity of a glass ceramic was measured, which was obtained in a glass ceramic manufacturing line in which a original glass having approximately identical composition was subjected to a heat treatment at 540°C for 5 hours so that crystalline nuclei are formed, subsequently was subjected to a heat treatment at 733°C for 3 hours so as to be crystallized. The measured XRD peak area was 1000.

The thermal expansion coefficient corresponding to the XRD peak area intensity of 1000 was estimated at 209x10⁻⁷ K⁻¹ according to the graph of Fig. 5. Therefore, the crystallization temperature was changed -2°C to be 731°C, and the manufacturing of the glass ceramic was continued. As a result, the glass ceramic having the desired physical property that the thermal expansion coefficient thereof is 105x10⁻⁷ K⁻¹ was obtained.

### (Embodiment 3)

A manufacturing method of a glass ceramic in which the desired physical property is the thermal expansion coefficient of 100x10⁻⁷ K⁻¹ and a quality control method in which the physical property parameter is ultrasonic longitudinal wave velocity will be explained.

A original glass consisting of the following components in mass% in terms of a oxide,

| | |
|---|---|
| SiO₂ | 67.4% |
| Li₂O | 6.2% |
| K₂O | 2.0% |
| MgO | 2.0% |
| ZnO | 6.0% |
| SrO | 1.7% |
| BaO | 2.5% |
| P₂O₅ | 2.0% |
| ZrO₂ | 2.4% |
| Al₂O₃ | 7.4% |
| Sb₂O₃ | 0.4% |

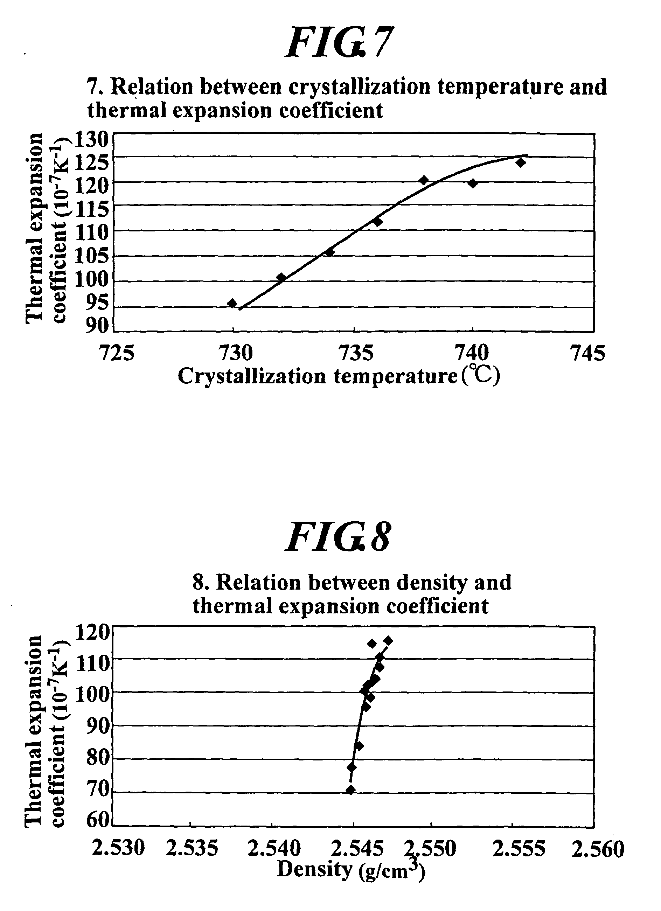

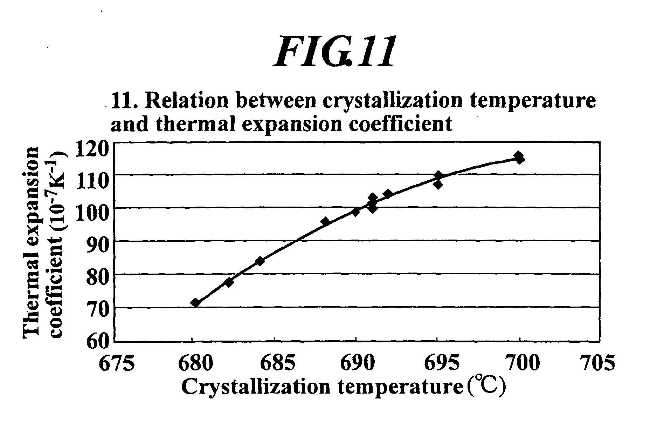

was subject to a heat treatment at 540 °C for 5 hours so that crystalline nuclei are formed, and subsequently was subject to a heat treatment for 3 hours at various crystallization temperatures in a range of 680 to 700 °C to be crystallized. Thus, the glass ceramic was obtained. The density, ultrasonic longitudinal wave velocity and thermal expansion coefficient of this sample were measured. The predominant crystal phase of the glass ceramic was α-cristobalite and α-cristobalite solid solution. The results are shown as the graphs of Fig. 8 to Fig. 11.

In Fig. 8, the slope of the thermal expansion coefficient based on the density at around 90x10⁻⁷ K⁻¹ of the thermal expansion coefficient was 24x10⁻⁴ cm³·g·K⁻¹. In the glass ceramic having the above composition, since the density of the glass matrix is nearly equal to and that of deposited crystal, the density of the glass ceramic is merely changed even when the thermal expansion coefficient thereof is changed according to the increase of the deposited crystal. Thus, in the glass ceramic having this composition, it is impossible to control the thermal expansion coefficient thereof accurately only by the density thereof, since the variation of the density is small compared with that of the thermal expansion coefficient.

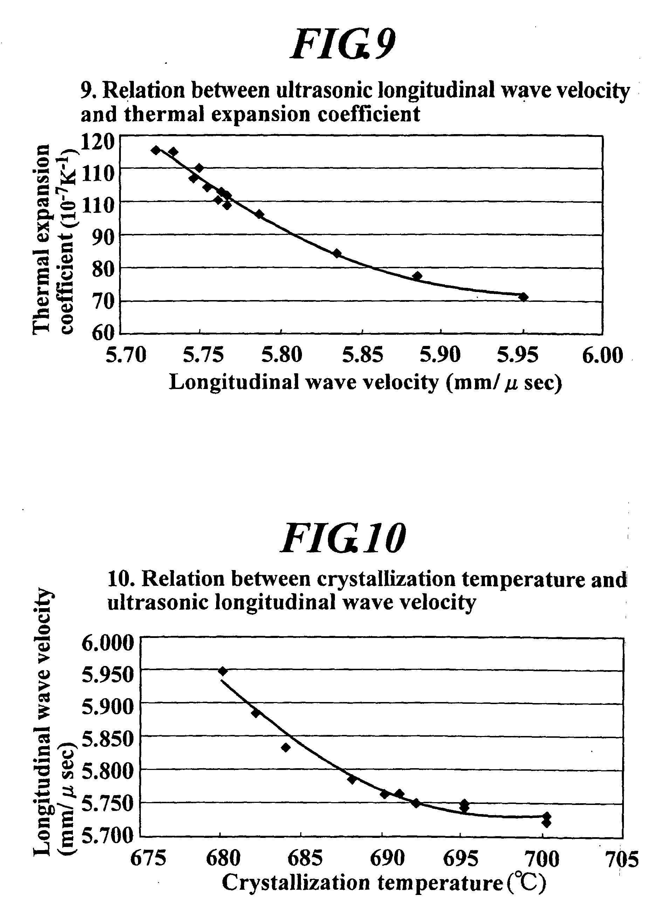

A relation between the ultrasonic longitudinal wave velocity and the thermal expansion coefficient is shown in Fig. 9. The absolute value of the slope of a thermal expansion coefficient based on the ultrasonic longitudinal wave velocity is 2.5x10⁻⁵ µs·mm⁻¹·K⁻¹ at around 90x10⁻⁷ K⁻¹ of the thermal expansion coefficient.

Next, the ultrasonic longitudinal wave velocity of a glass ceramic was measured, which was obtained in a glass ceramic manufacturing line in which an original glass having approximately identical composition was subjected to a heat treatment at 540°C for 5 hours so that crystalline nuclei are formed, subsequently was subjected to a heat treatment at 690°C for 3 hours to be crystallized. The measured ultrasonic longitudinal wave velocity was 5.752 mm/µsec.

The thermal expansion coefficient corresponding to the ultrasonic longitudinal wave velocity of 5.752 mm/µsec was estimated at 103x10⁻⁷ K⁻¹ according to the graph of Fig. 9. Therefore, the crystallization temperature was changed -2°C to be 688°C, and the manufacturing of the glass ceramic was continued. As a result, the glass ceramic having a desired physical property that the thermal expansion coefficient thereof is 100x10⁻⁷ K⁻¹ was obtained.

### Industrial Applicability

According to the present invention, correlation data between a physical property parameter of a glass ceramic which can be easily measured in a non destructive manner, such as a density, a XRD peak area intensity, a ultrasonic longitudinal wave velocity and the like, and a desired physical property of the glass ceramic which largely depends on a deposited crystal content, such as a thermal expansion coefficient is previously obtained. Subsequently, the desired physical property of the glass ceramic which is sampled from a glass ceramic manufacturing line is estimated from the measured value of the physical property parameter thereof. Thus, it becomes possible to perform a rapid quality control of a glass ceramic at low cost.

## Claims

1. A manufacturing method of a glass ceramic having a desired physical property value and a physical property parameter which relates to the desired physical property, comprising:
obtaining previously a relation between a crystallization temperature and the physical property and a relation between a the physical property parameter and the physical property with respect to a glass ceramic having an identical composition of the glass ceramic
measuring the physical property parameter with respect to the glass ceramic sampled from a manufacturing line of the glass ceramic,
determining an actual crystallization temperature corresponding to the desired physical property value based on the relations,
giving a heat treatment to an original glass at the determined temperature so as to grow a predetermined crystal phase.

2. The manufacturing method of the glass ceramic as claimed in claim 1, wherein the physical property is a thermal expansion coefficient.

3. The manufacturing method of the glass ceramic as claimed in claim 1 or 2, wherein the physical property parameter is a density.

4. The manufacturing method of the glass ceramic as claimed in claim 3, wherein the physical property is a thermal expansion coefficient, the physical property parameter is the density and an absolute value of a slope of the thermal expansion coefficient based on the density is 4.0x10⁻⁴ cm³·g⁻¹·K⁻¹ or less at a desired thermal expansion coefficient in a previously obtained relation between the density and the thermal expansion coefficient.

5. The manufacturing method of the glass ceramic as claimed in any one of claims 1 to 4, wherein the predetermined crystal phase contains α-quartz.

6. The manufacturing method of the glass ceramic as claimed in claim 5, wherein the predetermined crystal phase is α-quartz and lithium disilicate.

7. The manufacturing method of the glass ceramic as claimed in claim 1 or 2, wherein the physical property parameter is a XRD peak area intensity.

8. The manufacturing method of the glass ceramic as claimed in claim 7, wherein the predetermined crystal phase contains α-quartz.

9. The manufacturing method of the glass ceramic as claimed in claim 8, wherein the predetermined crystal phase is α-quartz and lithium disilicate.

10. The manufacturing method of the glass ceramic as claimed in claim 8 or 9, wherein the XRD peak area intensity is a XRD peak area intensity of α-quartz at 2θ=26°.

11. The manufacturing method of the glass ceramic as claimed in claim 1 or 2, wherein the physical property parameter is ultrasonic longitudinal wave velocity.

12. The manufacturing method of the glass ceramic as claimed in claim 11, wherein the physical property is a thermal expansion coefficient, the physical property parameter is the ultrasonic longitudinal wave velocity and an absolute value of a slope of the thermal expansion coefficient based on the longitudinal wave velocity is 8x10⁻⁵ µs·mm⁻¹·K⁻¹ or less at a desired thermal expansion coefficient in a previously obtained relation between the longitudinal wave velocity and the thermal expansion coefficient.

13. A quality control method of a glass ceramic having a desired physical property value and a physical property parameter which relates to the desired physical property, comprising:
obtaining previously a relation between a crystallization temperature and the physical property and a relation between a the physical property parameter and the physical property with respect to a glass ceramic having an identical composition of the glass ceramic,
measuring the physical property parameter with respect to the glass ceramic sampled from a manufacturing line of the glass ceramic and
controlling an actual crystallization temperature based on the relations so that the manufactured glass ceramic has the desired physical property value.

14. The quality control method of the glass ceramic as claimed in claim 13, wherein the physical property is a thermal expansion coefficient.

15. The quality control method of the glass ceramic as claimed in claims 13 or 14, wherein the physical property parameter is a density.

16. The quality control method of the glass ceramic as claimed in claim 15, wherein the physical property is a thermal expansion coefficient, the physical property parameter is the density and an absolute value of a slope of the thermal expansion coefficient based on the density is 4.0x10⁻⁴ cm³·g⁻¹·K⁻¹ or less at a desired thermal expansion coefficient in a previously obtained relation between the density and the thermal expansion coefficient.

17. The quality control method of the glass ceramic as claimed in any one of claims 13 to 16, wherein the predetermined crystal phase contains α-quartz.

18. The quality control method of the glass ceramic as claimed in claim 17, wherein the predetermined crystal phase is α-quartz and lithium disilicate.

19. The quality control method of the glass ceramic as claimed in claim 13 or 14, wherein the physical property parameter is a XRD peak area intensity.

20. The quality control method of the glass ceramic as claimed in claim 19, wherein the predetermined crystal phase contains α-quartz.

21. The quality control method of the glass ceramic as claimed in claim 20, wherein the predetermined crystal phase is α-quartz and lithium disilicate.

22. The quality control method of the glass ceramic as claimed in claim 20 or 21, wherein the XRD peak area intensity is a XRD peak area intensity of α-quartz at 2θ=26°.

23. The quality control method of the glass ceramic as claimed in claim 13 or 14, wherein the physical property parameter is ultrasonic longitudinal wave velocity.

24. The quality control method of the glass ceramic as claimed in claim 23, wherein the physical property is a thermal expansion coefficient, the physical property parameter is the ultrasonic longitudinal wave velocity and an absolute value of a slope of the thermal expansion coefficient based on the longitudinal wave velocity is 8x10⁻⁵ µs·mm⁻¹·K⁻¹ or less at a desired thermal expansion coefficient in a previously obtained relation between the longitudinal wave length and the thermal expansion coefficient.
